# EUROPEAN PATENT SPECIFICATION

(11) **EP 2 501 100 B1**
(45) Date of publication and mention of the grant of the patent: **29.05.2013**
(21) Application number: 12159351.1
(22) Date of filing: 14.03.2012
(51) Int. Cl.: H04L 29/06

(54) **Quarantine network system**
Quarantänenetzwerksystem
Système de réseau de quarantaine

(30) Priority: 18.03.2011 JP 2011061343
(43) Date of publication of application: 19.09.2012
(73) Proprietor: Ricoh Company, Ltd., Tokyo 143-8555 (JP)
(72) Inventor: Azuma, Yoshikazu, Tokyo 143-8555 (JP)
(74) Representative: Schwabe - Sandmair - Marx

(56) References cited:
- WO-A1-2009/146405
- US-A1- 2009 113 540
- US-A1- 2009 307 753
- "Telecommunications and Internet converged Services and Protocols for Advanced Networking (TISPAN); Security services and mechanisms for customer premises networks connected to TISPAN NGN", ETSI DRAFT; 07047-NGN-R3V042, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.4.2, 20 December 2010 (2010-12-20), pages 1-38, XP014063529, [retrieved on 2010-12-20]

## Description

### Description of the Background Art

Security concerns on computers and networks have been growing, as has the desire for secure network systems. In light of such security concerns, corporations, companies or the like employ a network access control (NAC) technology, which can conduct a verification process for apparatuses to be connected to an intra-network, and such technology does prevent the connection of unverified apparatuses. The NAC technology includes, for example, Institute of Electrical and Electronics Engineers (IEEE) 802.1x technical standard, which is a verification process for verifying apparatuses to be connected to a communication network such as a wireless local area network (LAN) based on identification (ID) at each port.

In addition to such NAC technology used to verify apparatuses to be connected to a network, a security technology such as a quarantine network has been employed as disclosed in, for example, JP-2006-252471-A, in which it is determined whether a particular apparatus conforms to a security policy, and if the apparatus does not conform to the security policy, such apparatus is not allowed to be connected to an intra-network.

Security concerns may occur, for example, as information falsification/leakage by computer virus and/or exploiting a vulnerability of the operating system (OS). Such attacks can be prevented by updating versions of virus definition files of anti-virus software, and applying security patches for the OS.

However, as for corporations, companies or the like using a greater number of apparatuses connected to an intra-network, it is too difficult for an administrator to check whether security processes are being effectively conducted for each apparatus.

Accordingly, a security policy coping with security concerns is defined, and a quarantine network to determine whether apparatuses to be connected to a network conform to the concerned security policy is employed, in which any nonconforming apparatus is refused connection.

A quarantine network is a network using security technology that can be configured as follows. Firstly, an apparatus to be connected to a network is inspected, and an apparatus not satisfying connection-acceptance criteria is refused connection to the network. In the inspection, it is inspected whether an apparatus to be connected to the network conforms to the security policy of the network. Specifically, it is inspected whether information of the inspection target apparatus satisfies connection-acceptance criteria defined by the security policy, for example, whether the version of virus definition file is the latest version, and whether a security patch is supplied to the OS.

Secondly, any connection-rejected apparatus not satisfying the connection-acceptance criteria is isolated from the network. For example, the connection-rejected apparatus is registered to a router or a switch to block communication with the connection-rejected apparatus.

Thirdly, if the apparatus does not conform to the security policy, the apparatus is remedied to conform the apparatus to the security policy, for example, by updating the virus definition file and supplying a security patch to OS is conducted. The remedied apparatus is inspected again, and then the connection to the network is allowed. JP-2006-252471-A discloses a quarantine network system to inspect, isolate, and remedy a quarantine target apparatus.

Conventionally, such quarantine network targets general-purpose computers such as personal computers (PC), and may not quarantine computer-embedded apparatuses such as an imaging apparatuses embedding computers. For example, IEEE802.1x is only applied to a port connectable to a PC, and is not applied to a port connectable to a printer.

Such operation may make the network system vulnerable. With growing concern for security, a quarantine network adaptable to computer-embedded apparatuses has been employed, especially for large companies or corporations. Vendors of computer-embedded apparatuses are required to cope with such situation. For example, a security policy such as IEEE 2600 is defined, to which imaging apparatuses are required to conform.

However, because conventional quarantine networks are mostly adapted to general-purpose computers such as PCs, conventional quarantine networks may not be good enough for quarantine of computer-embedded apparatuses.

Typically, from the viewpoint of system providers of quarantine network systems, it is difficult to determine acceptance/non-acceptance criteria of a security policy that computer-embedded apparatuses should be conformed to. Therefore, it is difficult for the system providers to provide quarantine network systems that can quarantine computer-embedded apparatuses. For example, if a vendor of OS for PCs provides a quarantine network system that targets PCs, the OS vendor can set inspection items and acceptance/non-acceptance criteria of inspection. However, if the quarantine target is computer-embedded apparatuses, it becomes difficult to set inspection items and acceptance/non-acceptance criteria of inspection by the system provider because vendors of computer-embedded apparatuses set their own specifications.

Further, even if inspection items and acceptance/non-acceptance criteria specifically set for computer-embedded apparatuses are incorporated in a quarantine network system to determine whether the computer-embedded apparatuses conform to security policies, it is necessary to distribute and update the inspection items and acceptance/non-acceptance criteria of inspection for each one of the apparatuses connectable to the quarantine network system, which complicates operation of the quarantine network.

"Telecommunications and Internet converged Services and Protocols for Advanced Networking (TISPAN); Security services and mechanisms for customer premises networks connected to TISPAN NGN", ETSI DRAFT; 07047-NGN-R3V042, no. V0.4.2, 20 December 2010, pages 1-38, XP014063529 discloses a network access control architecture which optionally office local remedy of agents installed on a client in order to fulfil a security policy of a network.

US 2009/0307753 A1 discloses a system and method for network access control in which a client is disconnected from the network for local remedy if it is determined that the client does not fulfil the security policy of the network.

US 2009/0113540 and WO 2009/126495 A1 also disclose systems and methods for controlling network access based on a security policy.

### SUMMARY

In the present invention, a quarantine network system having the features disclosed in claim 1 is devised. A preferred embodiment is defined in the dependent claim.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic configuration of a quarantine network system according to an example embodiment;
FIG. 2 is a schematic configuration of an inspection module for a computer-embedded apparatus;
FIG. 3A is a schematic hardware configuration of a computer-embedded apparatus;
FIG. 3B is a schematic hardware configuration of a quarantine server;
FIG. 4 is a sequential chart of a quarantine process executed by a quarantine network system, in which a quarantine server quarantines a computer-embedded apparatus;
FIG. 5 is a flow chart showing steps in an inspection process for a first modification of an example embodiment; and
FIGs. 6A and 6B show a sequential chart of a quarantine process executed by a quarantine network system for a second modification of an example embodiment, in which a quarantine server issues a request for inspection items of a computer-embedded apparatus to an apparatus inspection module.
The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION OF EXEMPLARY EMBODIMENTS

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, an apparatus or system according to an example embodiment is described hereinafter.

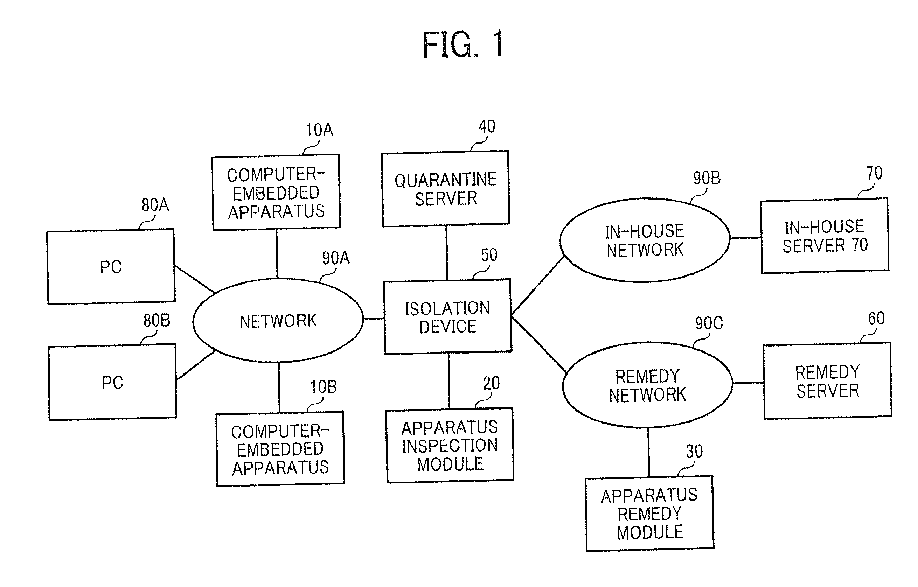

A description is given of quarantine network system according to an example embodiment with reference to FIGs. 1 to 4. FIG. 1 is a schematic configuration of a quarantine network system according to an example embodiment. The quarantine network system of includes, for example, a quarantine server 40, a quarantine client, and an isolation device 50. The quarantine server 40 can be used as a quarantine control apparatus or a quarantine managing apparatus that controls or manages a quarantine process according to example embodiments. The quarantine client can be used as a quarantine target apparatus, which is inspected by the quarantine process according to example embodiments. For example, a PC 80A may be used as a quarantine client.

In such quarantine network system, the quarantine server 40 transmits an inspection request to the quarantine client. Upon receiving the inspection request, the quarantine client generates and transmits an inspection result as a response of the inspection request to the quarantine server 40, by which the quarantine client is inspected. Further, the quarantine client can be remedied by using a remedy server 60, which will be described later.

Upon receiving the inspection result from the quarantine client, the quarantine server 40 determines whether the quarantine client conforms to a given security policy. If the quarantine server 40 determines that the concerned quarantine client does not conform to the security policy, the quarantine server 40 reports the non-conformance to the isolation device 50. The isolation device 50 may be, for example, a router, a switch, an access point of wireless local area network (LAN), a fire wall, or the like. Upon receiving the non-conformance report, the isolation device 50 blocks the communication of the concerned quarantine client with other apparatus. With such a process, for example, the connection of he quarantine client such as PC SOA to an in-house network 90B can be prevented.

The quarantine network system may further include the remedy server 60. Based on the communication with the quarantine client, the remedy server 60 can change a condition or status of the quarantine client to another condition or status that can be conformed to a concerned security policy. When the remedy server 60 conducts the remedy operation of the quarantine client, the isolation device 50 is set at a condition to allow communication between the remedy server 60, a remedy network 90C, and the quarantine client. The quarantine client remedied by the remedy server 60 is inspected again, and if the connection-acceptance criteria are satisfied, the quarantine client can be connected to the network. The quarantine client may include a communication unit to communicate with a remedy module or remedy server disposable on a network. The quarantine client may receive a remedy operation by the remedy module by communicating with the remedy module when the quarantine client is isolated by the quarantine control apparatus such as quarantine server 40.

Further, computer-embedded apparatuses 10A and 10B may be used as the quarantine client and connected to a network 90A of the quarantine network system. Further, the quarantine network system may include a computer-embedded apparatus inspection module 20 for inspecting such computer-embedded apparatuses, and a computer-embedded apparatus remedy module 30 for conducting remedy operation for such computer-embedded apparatuses. Such modules may be provided from vendors of computer-embedded apparatuses as tools to manage computer-embedded apparatuses. The computer-embedded apparatus inspection module 20 may be referred to as the apparatus inspection module 20, and the computer-embedded apparatus remedy module 30 may be referred to as the apparatus remedy module 30, hereinafter.

Further, the computer-embedded apparatus inspection module 20 can store inspection information required for the inspection of the client terminal such as computer-embedded apparatuses 10A and 10B. Such inspection information may be, for example, inspection items to be inspected for conformance/non-conformance to a given security policy; a function (or method) to obtain information of inspection target such as inspection items; and acceptance/non-acceptance criteria to determine acceptance/non-acceptance of information of inspection target such as inspection items.

The computer-embedded apparatus remedy module 30 can store remedy information required to remedy the client terminal such as computer-embedded apparatuses 10A and 10B. As such, the remedy module such as apparatus remedy module 30 can conduct a remedy operation of the quarantine client such as computer-embedded apparatuses based on the remedy information. Such remedy information may be, for example, information of virus definition files, information of security patch of operating system (OS) or the like. The inspection information and remedy information required for quarantine may be collectively referred to as "quarantine information."

Further, such modules may not be operated stand alone. For example, such modules may communicate with database of vendors of computer-embedded apparatuses via the Internet to receive information and operated based on the received information, wherein such information may be inspection items, inspection criteria such as connection-acceptance criteria, information of virus definition files, and information of security patch of OS provided from vendors of computer-embedded apparatuses.

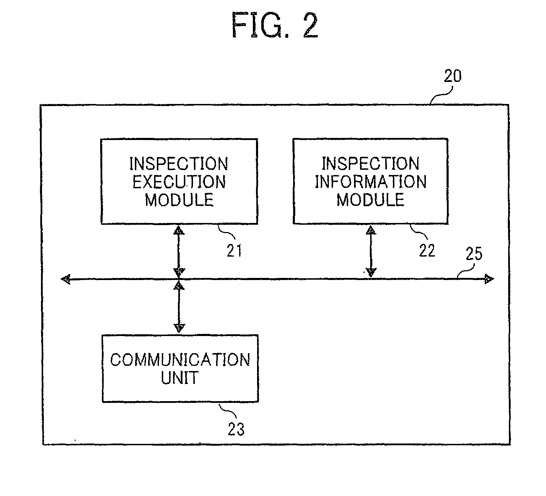

FIG. 2 is a schematic configuration of the apparatus inspection module 20 for the computer-embedded apparatus. As shown in FIG. 2, the computer-embedded apparatus inspection module 20 may include an inspection execution module 21, an inspection information module 22, a communication unit 23, and a bus 25.

The inspection execution module 21, disposable outside the quarantine client, can execute an inspection of computer-embedded apparatuses using a method of obtaining information of inspection target such as inspection items, and acceptance/non-acceptance criteria for determining acceptance/non-acceptance of information of inspection target such as inspection items.

The inspection information module 22, disposable outside the quarantine client, can generate a response when a request of inspection is received by the inspection information module 22, wherein the response includes, for example, inspection items required to determine conformance/non-conformance to a given security policy. As such, the inspection execution module 21 can inspect the quarantine client, and the inspection information module 22 can store inspection information useable to inspect conformance/non-conformance to each security policy.

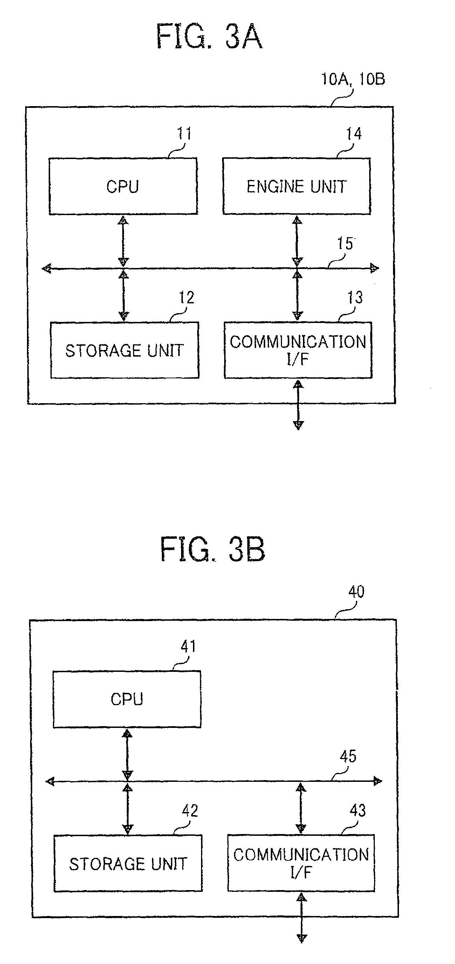

FIG. 3A is a schematic hardware configuration of the computer-embedded apparatus 10. As shown in FIG. 3A, the computer-embedded apparatus 10 (10A, 10B) includes, for example, a central processing unit (CPU) 11, a storage unit 12, a communication interface (I/F) 13, an engine unit 14, and a system bus 15. Further, the computer-embedded apparatus 10 may include a display unit, an operation unit, or the like depending on types of computer-embedded apparatus.

The CPU 11 reads out programs stored in the storage unit 12 and executes the programs to control the operation of the computer-embedded apparatus 10, by which functions of the computer-embedded apparatus 10 can be devised.

The storage unit 12 can store data or information required for activating functions of the computer-embedded apparatus 10 such as inspection information. The storage unit 12 may be, for example, a semiconductor storage device such as a random access memory (RAM), a hard disk drive (HDD), and an optical disk, or the like.

The communication I/F 13 is a communication unit to conduct the communication between the computer-embedded apparatus 10 and other apparatus via a communication path or route such as a wired or wireless communication path.

When the computer-embedded apparatus 10 is used as the quarantine client, the computer-embedded apparatus 10 communicates with the quarantine server 40 and the isolation device 50 via the communication I/F 13 and the network 90A. The communication I/F 13 may be, for example, a local area network (LAN) interface, and a universal serial bus (USB) interface.

The engine unit 14 is an input/output unit to input/output data which is physically output-able, wherein communication-purpose data may be input/output using other unit. For example, if the computer-embedded apparatus 10 is a laser printer, a print engine for electrophotographic image forming corresponds to the engine unit 14. If the computer-embedded apparatus 10 is a scanner, a scanner engine for image scanning corresponds to the engine unit 14. The OS that controls the engine unit 14 may be customized for each computer-embedded apparatus 10. Therefore, it may be difficult to access an internal configuration of the engine unit 14, which is different from the OS of general purpose computers that can be accessed easily.

Further, each unit shown in FIG. 3A can be an integrated as one unit or may be used as separate units. For example, the storage unit 12 may be configured with a plurality of semiconductor storage devices such as a RAM and a HDD. Further, each unit shown in FIG. 3A may not be disposed in the same casing. For example, the CPU 11 and the storage unit 12 may be in one casing, or the CPU 11 and the storage unit 12 may be in other casing, and such casings can be connected with a communication line to configure the computer-embedded apparatus 10, in which an communication I/F is disposed for each casing. Further, the computer-embedded apparatus 10 can be added with other unit by vendors. For example, a display unit such as a liquid crystal display (LCD), and an operation unit such as a key board and a touch panel can be added. The added unit may be disposed in the same casing or in other casing.

FIG. 3B is a schematic hardware configuration of the quarantine server 40. As shown in FIG. 3B, the quarantine server 40 includes, for example, a central processing unit (CPU) 41, a storage unit 42, a communication interface (I/F) 43, and a system bus 45.

The CPU 41 reads out programs stored in the storage unit 42 and executes the programs to control a quarantine operation. The storage unit 42 can store data or information required for the quarantine operation such as inspection information. The storage unit 42 may be, for example, a semiconductor storage device such as a random access memory (RAM), a hard disk drive (HDD), and an optical disk, or the like. The communication I/F 43 is a communication unit to conduct the communication between the quarantine server 40 and other apparatus via a communication path or route such as a wired or wireless communication path. The quarantine server 40, used as the quarantine control apparatus, communicates with other apparatus via the communication I/F 43 and the network 90A. The communication I/F 43 may be, for example, a local area network (LAN) interface, and a universal serial bus (USB) interface.

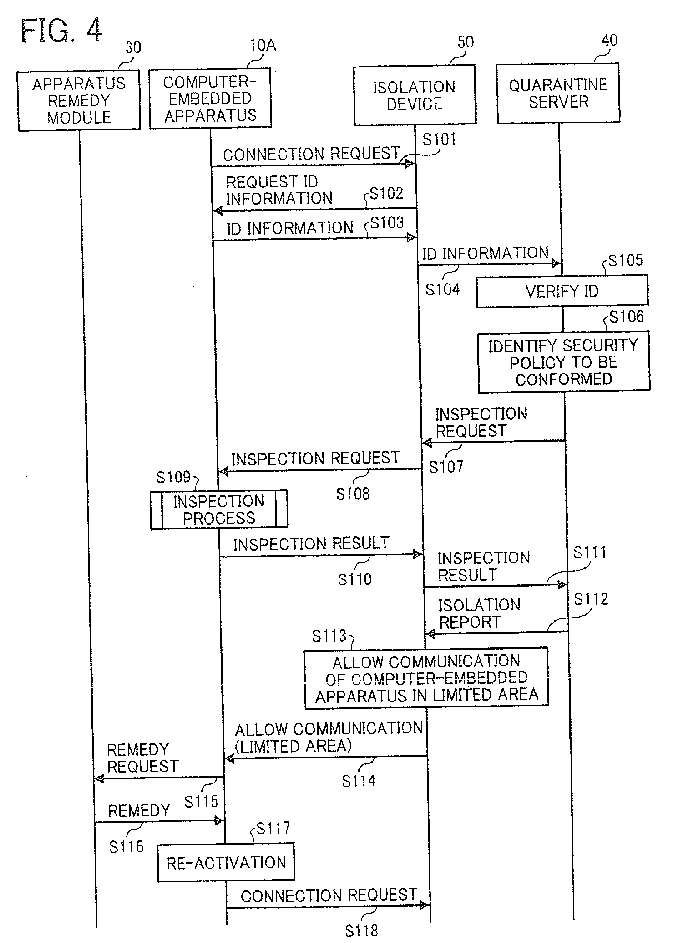

A description is given of a quarantine process for the quarantine client such as the computer-embedded apparatus 10A, which can be conducted by using the quarantine server 40 disposed for the quarantine network system with reference to FIG. 4. FIG. 4 is a sequential chart of quarantine and remedy process for the computer-embedded apparatus 10A to be connected to an in-house server 70 (see FIG. 1).

At first, the computer-embedded apparatus 10A transmits a connection request to the isolation device 50 via the network 90A (step S101). Upon receiving the connection request, the isolation device 50 requests identification (ID) information of the computer-embedded apparatus 10A to the computer-embedded apparatus 10A (step S 102). A receiver of the quarantine client such as computer-embedded apparatus 10A receives such request for ID information of the quarantine client. The receiver of the computer-embedded apparatus 10A may be the communication I/F 13.

The ID information of the quarantine client can be used to identify the quarantine client. For example, a digital certificate of the quarantine client can be used as ID information of the quarantine client. In general, when one apparatus is registered as a quarantine target (or quarantine client) of a quarantine network system, such ID information of the quarantine client can be stored, for example, in the quarantine server 40 and/or the isolation device 50. The digital certificate stored for the quarantine client can be issued by a certificate unit, and such certificate unit can be disposed separately. Further, the digital certificate can be issued by the quarantine server 40 by providing the function of certificate unit to the quarantine server 40.

Upon receiving the ID information request, the computer-embedded apparatus 10A transmits the ID information to the isolation device 50 (step S103). Upon receiving the ID information from the computer-embedded apparatus 10A, the isolation device 50 transmits the ID information of the computer-embedded apparatus 10A to the quarantine server 40 (step S 104). A receiving unit of quarantine control apparatus such as quarantine server 40 receives verification information of the quarantine client. The receiving unit of quarantine server 40 may be the communication I/F 43. The quarantine server 40 verifies whether the computer-embedded apparatus 10A is connectable to other apparatus or device based on the received ID information (step S105). In the process shown in FIG. 4, the quarantine server 40 conducts the apparatus verification, but a verification or authentication server used for the apparatus verification can be separately provided with respect to the quarantine server 40.

When the verification has succeeded, the quarantine server 40 indentifies a security policy that the computer-embedded apparatus 10A (quarantine client) is required to be conformed to. An identification unit of quarantine control apparatus such as quarantine server 40 identifies a security policy that the quarantine client is required to conform to based on the received verification information. The identification unit of quarantine server 40 may be the CPU 41. For example, the quarantine server 40 indentifies a technical standard such as IEEE 2600 (step S106) as the security policy for the computer-embedded apparatus 10A. The security policy can be identified because the quarantine server 40 can store the ID information of the quarantine client, information of types of the quarantine client identifiable from the ID information of the quarantine client, and relational information of quarantine clients and security policies that each quarantine client is required to conform to.

When the verification has failed at step S 105, the quarantine server 40 transmits a rejection response for the connection request of the computer-embedded apparatus 10A. The isolation device 50 receives the rejection response from the quarantine server 40, and transmits the rejection response to the computer-embedded apparatus 10A.

Further, after indentifying the security policy at step S106, the quarantine server 40 transmits an inspection request including the information of identified security policy to the isolation device 50 (step S107).

At step S 107, the quarantine server 40 can transmit the inspection request for any types of apparatuses that may conform to particular security policies, wherein such apparatuses may include general purpose computers conformable to given security policies and apparatuses other than general purpose computers conformable to other given security policies. As such the quarantine server 40 can transmit an inspection request to any types of apparatus, each of which may conform to different security policies. As such, the quarantine server 40 can control inspections of any types of apparatuses such as general purpose computers and other apparatuses without differentiating general purpose computers and other apparatuses. An inspection request unit of quarantine control apparatus such as quarantine server 40 transmits an inspection request to the quarantine client, wherein the inspection request requests the quarantine client to inspect conformance/non-conformance to the security policy identified by the identification unit of the quarantine control apparatus. The inspection request unit of quarantine server 40 may be the CPU 41.

Upon receiving the inspection request, the isolation device 50 transmits the inspection request to the computer-embedded apparatus 10A (step S108). Upon receiving the inspection request, the computer-embedded apparatus 10A conducts an inspection process (step S109). The receiver of quarantine client such as computer-embedded apparatus 10A receives such inspection request from the quarantine control apparatus. In an example embodiment, the computer-embedded apparatus 10A may include a memory or storage unit that can store inspection information required for the inspection process. If the inspection information is stored in the memory or storage unit of the computer-embedded apparatus 10A, the inspection process can be conducted using the inspection information stored in the computer-embedded apparatus 10A. The storage unit of quarantine client such as computer-embedded apparatus 10A can store inspection information useable to inspect conformance/non-conformance to a security policy set for the quarantine client.

Further, a reading unit of quarantine client such as computer-embedded apparatus 10A reads out the inspection information from the storage unit in view of the inspection request received by the receiver. The reading unit of the computer-embedded apparatus 10A may be the CPU 11. Further, an inspection unit of quarantine client such as computer-embedded apparatus 10A inspects the quarantine client using the inspection information read out by the reading unit from the storage unit. The inspection unit of computer-embedded apparatus 10A may be the CPU 11.

For example, if the inspection items are the registry information of OS, the computer-embedded apparatus 10A obtains the registry information using a function to obtain such information, and generates acceptance/non-acceptance information based on the acceptance/non-acceptance criteria of the concerned registry information. In this example case, the inspection information may be composed of the function to obtain registry information and connection-acceptance criteria of registry information. The computer-embedded apparatus 10A conducts such inspection process for each one of inspection items, and generates an inspection result for each one of the inspection items, wherein the inspection result includes information of acceptance/non-acceptance such as passed or not-passed of criteria.

Then, the inspection result of the entire inspection items such as acceptance/non-acceptance is transmitted to the isolation device 50 as a response to the inspection request (step S 110). An inspection result reporting unit of quarantine client such as computer-embedded apparatus 10A transmits the inspection result obtained by the inspection unit to the quarantine control apparatus. The inspection result reporting unit of computer-embedded apparatus 10A may be the CPU 11.

In an example embodiment, the computer-embedded apparatus 10A can store information to determine a relationship between the inspection result for each inspection item and the inspection result of the entire inspection. For example, if the inspection result of one inspection item is determined as non-acceptance, the entire inspection result may be determined as non-acceptance (i.e., not passed) automatically or promptly. Further, for example, even if the inspection result of one inspection item is determined as non-acceptance, the entire inspection result may not be determined as non-acceptance automatically or promptly. In such a case, the entire inspection result may be determined as non-acceptance, for example, if the inspection result of other inspection item is also determined as non-acceptance. As such, the entire inspection result can be detennined various ways in view of the inspection result of each inspection item.

Upon receiving the inspection result from the computer-embedded apparatus 10A, the isolation device 50 transmits the inspection result to the quarantine server 40 (step S111). The quarantine server 40 determines whether the computer-embedded apparatus 10A is allowed to be connected to a network based on the received inspection result. The quarantine server 40 can determine the connection-allowance/non-connection of the computer-embedded apparatus 10A because the quarantine server 40 stores a relationship between the inspection result and connection-allowance/non-connection of the computer-embedded apparatus 10A.

The connection-allowance/non-connection of quarantine client such as computer-embedded apparatus 10A can be determined by setting several levels such as allowing connection to any networks, not-allowing connection to any networks, partially allowing connection such as allowing connection to one network but not-allowing connection to other network.

For example, if the quarantine server 40 determines that the connection of the computer-embedded apparatus 10A to the in-house network 90B is not allowed, but the connection of the computer-embedded apparatus 10A to the remedy network 90C is allowed, the quarantine server 40 reports an isolation report to the computer-embedded apparatus 10A (step S112). The quarantine control apparatus such as quarantine server 40 includes an isolation control unit to isolate the quarantine client based on the inspection result received from the quarantine client. The isolation control unit of quarantine server 40 may be the CPU 41.

Upon receiving the isolation report, the isolation device 50 allows the communication of computer-embedded apparatus 10A in a limited area such as allowing the communication of computer-embedded apparatus 10A only with the remedy network 90C (step S113). Then, the isolation device 50 reports to the computer-embedded apparatus 10A that the computer-embedded apparatus 10A is allowed to be connected to the limited area (step S114).

In contrast, if the quarantine server 40 determines that the computer-embedded apparatus 10A can be connected to any networks, the quarantine server 40 reports the connection allowance without area limitation to the isolation device 50. Upon receiving the connection allowance report without area limitation, the isolation device 50 allows the computer-embedded apparatus 10A to communicate any devices or units in the network system without limitation, and reports to the computer-embedded apparatus 10A that the computer-embedded apparatus 10A is allowed to be connected to any devices or units in the network system without limitation. In such a case, the computer-embedded apparatus 10A can access, for example, to the in-house server 70 disposed on an in-house network 90B.

Further, if the computer-embedded apparatus 10A receives a connection allowance report liming the connection allowable area at step S114, the computer-embedded apparatus 10A determines that a remedy operation is required, and may transmit a remedy request to the apparatus remedy module 30 via the remedy network 90C (step S 115), wherein the computer-embedded apparatus 10A is allowed to be connected to the remedy network 90C and the apparatus remedy module 30.

Upon receiving the remedy request, the apparatus remedy module 30 conducts a remedy operation for the computer-embedded apparatus 10A (step S116). Specifically, the apparatus remedy module 30 transmits remedy data to the computer-embedded apparatus 10A and instructs the computer-embedded apparatus 10A to conduct a remedy operation using transmitted remedy data. For example, such remedy data may be virus definition file, which is updated, and/or security patch of OS. The quarantine client such as computer-embedded apparatus 10A includes a communication unit such as communication I/F 13 to communicate with the apparatus remedy module 30 disposable on a network. The quarantine client may receive a remedy operation from the apparatus remedy module 30 by communicating with the apparatus remedy module 30 when the quarantine client is isolated by the quarantine control apparatus.

In this case, the computer-embedded apparatus 10A transmits the remedy request to the apparatus remedy module 30 but not to the remedy server 60. However, if the remedy server 60 can remedy the computer-embedded apparatus 10A, the remedy request can be transmitted to the remedy server 60. Further, if the computer-embedded apparatus 10A can conduct the remedy operation by itself, the computer-embedded apparatus 10A may conduct the remedy operation itself without transmitting the remedy request to the apparatus remedy module 30 or the remedy server 60.

A device or apparatus that conducts such remedy operation can be selectable from the computer-embedded apparatus 10A, the apparatus remedy module 30, and the remedy server 60, and can be determined promptly which apparatus is used for the remedy operation.

However, there may be a case that an apparatus used for the remedy operation cannot be determined promptly. In such a case, an apparatus priority may be set for conducting the remedy operation as follows. For example, at first, the computer-embedded apparatus 10A is used for the remedy operation (self-remedy). If such self-remedy is not effective, the computer-embedded apparatus 10A transmits the remedy request to the remedy server 60. If a remedy-impossible response is received from the remedy server 60, the computer-embedded apparatus 10A transmits the remedy request to the apparatus remedy module 30.

After the remedy operation, the computer-embedded apparatus 10A can be reactivated by itself (step S 117). After the re-activation, the computer-embedded apparatus 10A transmits another connection request to the isolation device 50 again (step S 118) as similar to step S101. Then, the ID verification process (step S105) and the inspection process (step S 109) are conducted for the computer-embedded apparatus 10A again. If it is determined that the computer-embedded apparatus 10A conforms to the security policy by completing the remedy operation, the computer-embedded apparatus 10A is allowed to be connected, for example, to the in-house network 90B, by which the computer-embedded apparatus 10A can access, for example, to the in-house server 70.

In the above described configuration, the quarantine server 40 can identify a security policy for each apparatus to be connected to a network. Then, the quarantine server 40 can transmit an inspection request including information of concerned security policy to each apparatus, and the quarantine server 40 can receive an inspection result from each apparatus as a response to the inspection request. Accordingly, the quarantine server 40 is not required to store detailed information to inspect conformance/non-conformance of the security policy of each apparatus such as apparatuses other than general purpose computers. As such, because the quarantine client can store detail information of quarantine inspection, the quarantine server 40 can control a quarantine operation of the quarantine client by only storing information indicating which technical standard is applicable to which apparatus as the security policy.

Therefore, in the quarantine network system, general purpose computers required to conform to given security policies, and apparatuses not used as the general purpose computers and required to conform to other security policies can be inspected as the quarantine target easily.

Further, the inspection information stored in the quarantine client can be provided by makers or vendors of apparatuses used as the quarantine client, in which inspection information of the quarantine client can be prepared based on an understanding of the internal structure of the quarantine client. With such setting of inspection information, a working load of a provider of the quarantine server 40 can be reduced because the provider of the quarantine server 40 having only limited knowledge of information of each quarantine client provided by makers does not need to prepare various types of inspection information for various types of apparatuses.

### First modification of example embodiment

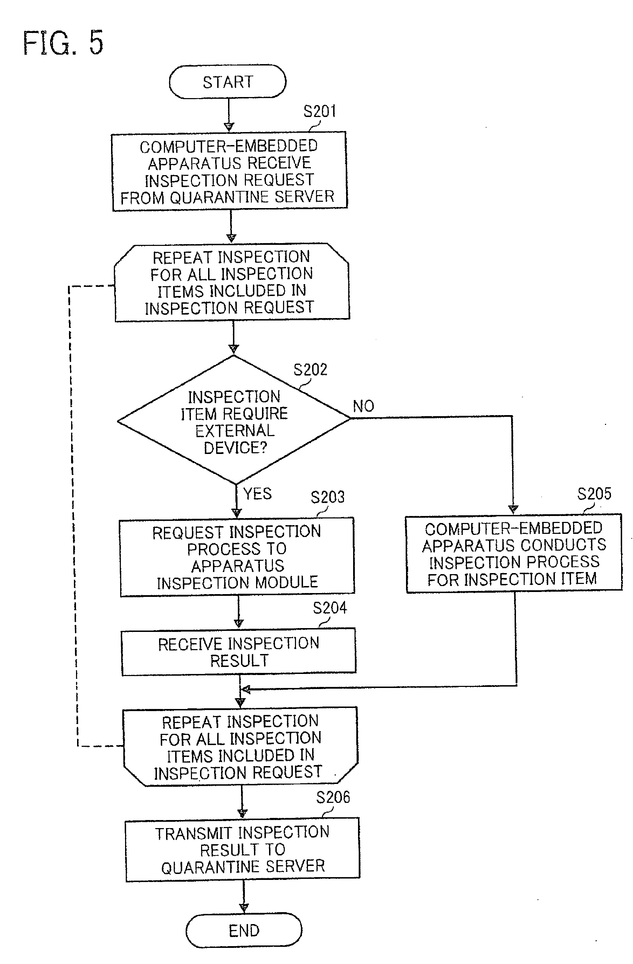

A description is given of a first modification of an example embodiment with reference to FIG. 5. The first modification uses an inspection process, which is different at step S109 shown in FIG. 4. In the above described example embodiment shown in FIG. 4, the computer-embedded apparatus 10A conducts the inspection process. In the first modification, the computer-embedded apparatus 10A requests the apparatus inspection module 20 to conduct the inspection process. Such processing may be effective if, for example, the computer-embedded apparatus 10A does not store required inspection information when receiving an inspection request from the quarantine server 40.

FIG. 5 is a flow chart showing steps in an inspection process of the first modification. In FIG. 5, at first, the computer-embedded apparatus 10A receives an inspection request from the quarantine server 40 via the isolation device 50 (step S201). Steps S202 to S205 are repeated to inspect inspection items one by one requested by the inspection request. As similar to the above described example embodiment, the computer-embedded apparatus 10A may store information of inspection items, required to be inspected in view of the security policy transmitted with the inspection request.

As for the repeating process from steps S202 to S205, at first, it is determined whether each inspection item, to be inspected, requires an external device (step S202). If the computer-embedded apparatus 10A itself can obtain information of inspection items and can determine the acceptance/non-acceptance for the concerned inspection items, an external device is not required for obtaining the inspection information. Such information obtained from the external device may be, for example, OS registry information defined as a technical standard of network access protection (NAP) of Microsoft Corporation.

Further, the computer-embedded apparatus 10A may be stored with information to determine whether the external device is necessary for each inspection item, wherein such information can used to conduct the determination at step S202. Further, the computer-embedded apparatus 10A may be stored with information indicating that some inspection items that does not require an external device for the inspection. For example, except such inspection items explicitly indicating that an external device is not required, other inspection items can be determined to require the external device.

If it is determined that the external device is not required for the concerned inspection item (step S202:No), the computer-embedded apparatus 10A conducts the inspection process for the concerned inspection item (step S205) as similar to the inspection process at step S109 of FIG. 4.

If it is determined that the external device is required for the concerned inspection item (step S202: Yes), the computer-embedded apparatus 10A requests an inspection process for the concerned inspection item to the external device such as the apparatus inspection module 20 (step S203).

For example, if the computer-embedded apparatus 10A does not store information required for inspection such as a function or method to obtain information of inspection items, it is determined that an external device is required, and then the computer-embedded apparatus 10A requests the apparatus inspection module 20 to obtain the concerned information required for inspection.

Further, for example, if the computer-embedded apparatus 10A can obtain information of inspection target such as inspection items, but does not store acceptance/non-acceptance criteria of inspection items, the computer-embedded apparatus 10A transmits the obtained inspection information such as inspection items to the apparatus inspection module 20 and requests the apparatus inspection module 20 to determine the acceptance/non-acceptance of the inspection items.

As such, the quarantine client may include a determination unit to determine whether an inspection is conduct-able for each inspection item by the inspection unit of the quarantine client by referencing inspection-execution-determination information stored in the storage unit of the quarantine client when the receiver of the quarantine client receives the inspection request from the quarantine control apparatus, wherein the inspection-execution-determination information can be used to determine which inspection item is inspectable or not by the computer-embedded apparatus 10A. The determination unit of computer-embedded apparatus 10A may be the CPU 11. Further, the quarantine client includes an instruction unit such as the CPU 11 of the computer-embedded apparatus 10A to instruct the inspection execution module 21 to inspect each inspection item that is determined by the determination unit as not inspectable by the inspection unit. Further, the inspection unit conducts an inspection for each inspection item which is determined by the determination unit as inspectable by the inspection unit of the quarantine client such as the computer-embedded apparatus 10A. The inspection result reporting unit of the quarantine client transmits at least one of an inspection result obtained from the inspection unit of the quarantine client and an inspection result obtained from the inspection execution module 21 to the quarantine control apparatus.

When the apparatus inspection module 20 has completed the inspection process, the computer-embedded apparatus 10A receives an inspection result from the apparatus inspection module 20 (step S204). When the inspection process of all inspection items has completed, the computer-embedded apparatus 10A transmits the inspection result to the quarantine server 40 (step S206).

In the above described case, the computer-embedded apparatus 10A does not store a function to obtain information of inspection items and acceptance/non-acceptance criteria, but stores information of inspection items required to be conformed to a given security policy.

However, there is a case that the computer-embedded apparatus 10A dose not store even information of inspection items required to be conformed to a given security policy. In such a case, the computer-embedded apparatus 10A can transmit a security policy to the apparatus inspection module 20 to request information of inspection items corresponding to the security policy. Upon receiving such request, the apparatus inspection module 20 transmits information of inspection items generated by the inspection information module 22 to the computer-embedded apparatus 10A as a response.

With such a configuration, even when the computer-embedded apparatus 10A dose not store information required for the inspection process, the inspection process can be conducted by requesting the inspection process to the apparatus inspection module 20. With such a configuration, distribution and updating of inspection information for the computer-embedded apparatus 10A is not required, and thereby the quarantine network system can be configured and operated easily. Such effect may become evident if the number of quarantine clients connectable to a quarantine network is great (e.g., quarantine network in large companies).

### Second modification of example embodiment

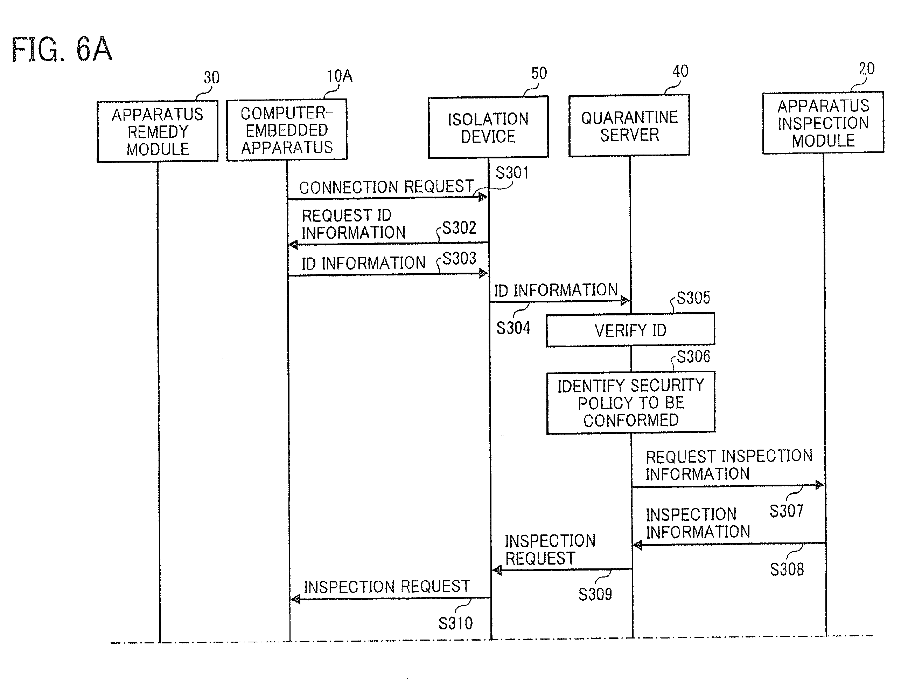

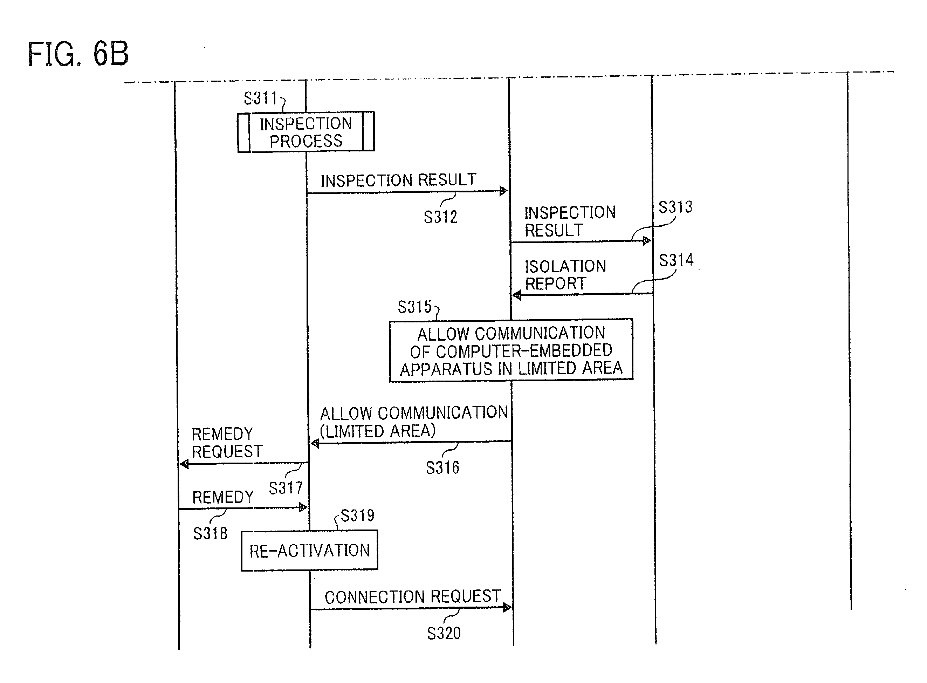

A description is given of a second modification of an example embodiment with reference to FIG. 6. FIG. 6 is a sequential chart of quarantine and remedy process of the second modification. The sequential chart of the second modification and the sequential chart of the previously described example embodiment (FIG. 4) indicate difference for the role of the quarantine server 40. In view of differences with FIG. 4, the sequential chart of the second modification is explained.

At first, steps S301 to S305 of FIG. 6 are same as steps S101 to step S105 of FIG. 4. In the process of quarantine network system of FIG. 4, the quarantine server 40 indentifies a security policy that the computer-embedded apparatus 10A is required to be conformed to (step S106), and then the quarantine server 40 transmits an inspection request including information of identified security policy to the computer-embedded apparatus 10A via the isolation device 50 (steps S 107, S108).

In the process of quarantine network system of FIG. 6, the quarantine server 40 indentifies the security policy that the computer-embedded apparatus 10A is required to be conformed to (step S306). If the identified security policy is a security policy for an apparatus other than general purpose computers, the quarantine server 40 transmits an inspection request including the inspection information required to inspect the conformance/non-conformance of the concerned security policy to the computer-embedded apparatus 10A via the isolation device 50 (steps S309, S310).

To conduct such processing, the quarantine server 40 receives the ID information of the computer-embedded apparatus 10A (step S304). Based on the received ID information, the quarantine server 40 identifies a security policy that the computer-embedded apparatus 10A is required to conform to (step S306). Then, the quarantine server 40 determines whether the concerned security policy is a security policy for general purpose computers or a security policy for apparatuses other than the general purpose computers. The quarantine server 40 can determine whether the concerned security policy is for general purpose computers or for apparatuses other than the general purpose computers because the quarantine server 40 can store information of security policies for general purpose computers and information of security policies for apparatuses other than the general purpose computers.

If the quarantine server 40 determines that the concerned security policy is for apparatus other than the general purpose computers, the quarantine server 40 requests inspection information, to be required for the inspection for the concerned security policy, to the apparatus inspection module 20 (step S307). Based on the request, the inspection information module 22 returns the required inspection information as a response to the quarantine server 40 (step S308). A requesting unit of the quarantine control apparatus such as quarantine server 40 requests inspection information to the inspection information module 22 used for inspecting conformance/non-conformance to the security policy identified by the identification unit of the quarantine control apparatus. The requesting unit of quarantine server 40 may be the CPU 41. The inspection information module 22 may be provided with the communication unit 23 to transmit the inspection information requested by the quarantine control apparatus to the quarantine control apparatus. The communication unit 23 can be provided separately from the inspection information module 22, or can be provided integrally with the inspection information module 22. Upon receiving the inspection request including inspection information at step S308, the quarantine server 40 transmits the inspection request to the isolation device 50 (step S309), and then the inspection request is transmitted from the isolation device 50 to the computer-embedded apparatus 10A (step S310). As such, based on the received inspection information, the inspection request unit of the quarantine control apparatus transmits an inspection request to the quarantine client to request an inspection of conformance/non-conformance to the security policy at the quarantine client.

Upon receiving the inspection request, the computer-embedded apparatus 10A conducts the inspection process based on the inspection request and the inspection information received with the inspection request (step S311). The inspection process for each inspection item can be conducted as similar to the previously described example embodiment (i.e., steps S312 to S320 of FIG. 6 are same as steps S110 to S118 of FIG. 4).

By conducting the above described processing shown in FIG. 6, the inspection request and the inspection information such as inspection items can be transmitted to the computer-embedded apparatus 10A, by which the quarantine server 40 can be used for an inspection process of the computer-embedded apparatus 10A, and the quarantine network can target the computer-embedded apparatus 10A as the quarantine client.

In such a configuration, the inspection information, used for inspecting the conforinance/non-conformance of security policies that apparatuses other than general purpose computers are required to conform to, is not required to be stored in the quarantine server 40 and the computer-embedded apparatus 10A, but such inspection information can be stored only in the apparatus inspection module 20.

With such a configuration, apparatuses required to conform to security policies other than security policies for general purpose computers can be set as the quarantine target in the quarantine network system easily. Further, by storing inspection information in the apparatus inspection module 20, distribution and updating of inspection information for the quarantine server 40 and the computer-embedded apparatus 10A is not required. With such a configuration, the quarantine network system can be configured and operated easily. Such effect may become evident if the number of quarantine clients connectable to a quarantine network is great (e.g., quarantine network in large companies).

Further, the inspection process (step S311) of the second modification (FIG. 6) can be combined with the first modification (FIG. 5). The combination of second modification and first modification may be effective, for example, when the computer-embedded apparatus 10A can receive all inspection information including the inspection request from the quarantine server 40, but cannot conduct the inspection process. For example, when the computer-embedded apparatus 10A stores information of function or method to obtain information of inspection target such as inspection items, but the function itself is not equipped in the computer-embedded apparatus 10A, the inspection process can be conducted if the computer-embedded apparatus 10A can request the apparatus inspection module 20 to conduct the inspection process as shown in FIG. 5.

Further, the inspection process (step S311) of second modification can be combined with the process of quarantine network system of FIG. 4, in which a user can select which inspection process is to be conducted in the quarantine network system. With such a configuration, the quarantine network system can be flexibly configured and operated with in view of user environment.

For example, when the number of apparatuses connectable an intra-network in a user environment is still small, inspection information may be stored in each quarantine client, and the process shown in FIG. 4 is conducted. Further, if the number of apparatuses connectable to the particular intra-network in the user environment becomes great, the apparatus inspection module 20 to store the inspection information therein may be added to the user environment, and then the process shown in FIG. 6 can be conducted. With such a configuration, the quarantine network system can be flexibly configured and operated in view of the user environment.

Each unit, device, apparatus, and process described in the above example embodiments can be configured differently. For example, the inspection execution module 21 and the inspection information module 22 can be separated physically. Further, the quarantine server 40, the isolation device 50, the remedy server 60, the apparatus inspection module 20, and the apparatus remedy module 30 can be separated or can be integrated physically. Further, such units can be configured using one or more software programs.

Further, the apparatus inspection module 20 and the apparatus remedy module 30 can be integrated as a quarantine module for computer-embedded apparatuses. Further, the quarantine server 40 and the remedy server 60 can be integrated as one quarantine server. In such a case, if quarantine information of computer-embedded apparatuses, other than general purpose computers, is stored in the quarantine module for computer-embedded apparatuses, distribution and updating of quarantine information to the quarantine server and the quarantine client is not required, and thereby such quarantine network system can be configured and operated easily.

Further, the computer such as a processor controlling the computer-embedded apparatus 10 can execute the above described process using programs stored in the storage unit 12. Further, the computer controlling the computer-embedded apparatus 10 can execute the above described process using programs stored in a storage unit (e.g., semiconductor storage device, optical storage device) connected via the communication I/F 13, in which the computer controlling the computer-embedded apparatus 10 can read out the programs from the storage unit and execute the above described process. Such storage unit can be connected via the communication I/F 13 and a communication line. Further, such storage unit can be used as a computer to download programs to the computer-embedded apparatus 10.

Further, the above described example embodiment and modifications of example embodiment can be combined in any manner within the scope of the appended claims.

In the above described quarantine network system and the quarantine client, the quarantine network system that can quarantine general purpose computers and apparatuses other than general purpose computers as the quarantine target can be devised easily, wherein the general purpose computers conform to given security policies, and the apparatuses other than general purpose computers conform to other given security policies.

By employing the above described quarantine network system and/or the quarantine client, in addition to general purpose computers such as PC and server, computer-einbedded apparatuses such as cell phones, personal digital assistants (PDA), multifunction peripherals (MFP), printers, scanners, other imaging apparatuses, internet protocol (IP) phones, TVs, game players, and other digital devices can be set as the quarantine client or target in a quarantine network system easily.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a Wireless Application Protocol (WAP) or 3G-compliant phone) and so on. Since the present invention can be implemented as software, each and every aspect of the present invention thus encompasses computer software implementable on a programmable device. The computer software can be provided to the programmable device using any storage medium for storing processor readable code such as a flexible disk, a compact disk read only memory (CD-ROM), a digital versatile disk read only memory (DVD-ROM), DVD recording only/rewritable (DVD-R/RW), electrically erasable and programmable read only memory (EEPROM), erasable programmable read only memory (EPROM), a memory card or stick such as USB memory, a memory chip, a mini disk (MD), a magneto optical disc (MO), magnetic tape, a hard disk in a server, a solid state memory device or the like, but not limited these.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C++, Java (registered trademark), JavaScript (registered trademark), Perl, Ruby, or legacy programming languages such as machine language, assembler language to control functional units used for the apparatus or system. For example, a particular computer (e.g., personal computer, work station) may control an information processing apparatus or an image processing apparatus such as image forming apparatus using a computer-readable program, which can execute the above-described processes or steps. In the above described embodiments, at least one or more of the units of apparatus can be implemented in hardware or as a combination of hardware/software combination. In the above described example embodiments, units, modules, processing units, computing units, or controllers can be configured with using various types of processors, circuits, or the like such as a programmed processor, a circuit, an application specif integrated circuit (ASIC), used singly or in combination. Each of the above described units, modules, processing units, computing units, or controllers can function various ways to process data for conducting the above described example embodiment.

## Claims

1. A quarantine network system, comprising:
a quarantine control apparatus (40); and
a quarantine client (10) connectable to the quarantine control apparatus (40) via a network (90A),
the quarantine control apparatus (40) including:
a receiving unit to receive verification information of the quarantine client (10);
an identification unit to identify a security policy that the quarantine client (10) is required to conform to based on the received verification information; and
an inspection request unit to transmit an inspection request to the quarantine client (10), the inspection request requesting the quarantine client (10) to inspect conformance/non-conformance to the security policy identified by the identification unit,
the quarantine client (10) including:
a receiver to receive the inspection request from the quarantine control apparatus (40);
a storage unit (12) that can store inspection information useable to inspect conformance/non-conformance to the security policy set for the quarantine client (10);
a reading unit to read out the inspection information from the storage unit (12) in view of the inspection request received by the receiver;
an inspection unit to inspect the quarantine client (10) using the inspection information read out by the reading unit from the storage unit (12); and
an inspection result reporting unit to transmit an inspection result obtained by the inspection unit to the quarantine control apparatus (40),
the quarantine network system further comprising:
an inspection information module, disposed outside the quarantine client (10), to store inspection information useable to inspect conformance/non-conformance to each security policy, and
an inspection execution module (21), disposed outside the quarantine client (10), to inspect the quarantine client (10),
wherein the quarantine control apparatus (40) further includes:
a requesting unit to issue a request for inspection information to the inspection information module to inspect conformance/non-conformance to the security policy identified by the identification unit of the quarantine control apparatus (40),
wherein the inspection information module is provided with a communication unit (43) to transmit the inspection information requested by the quarantine control apparatus (40) to the quarantine control apparatus (40),
wherein, based on the inspection information received by the quarantine control apparatus (40), the inspection request unit of the quarantine control apparatus (40) transmits an inspection request to the quarantine client (10) to request an inspection of conformance/non-conformance to the security policy at the quarantine client (10),
wherein the quarantine client (10) further includes:
a determination unit to determine whether an inspection is conduct-able for each inspection item by the inspection unit by referencing inspection-execution-determination information stored in the storage unit (12) of the quarantine client when the receiver receives the inspection request from the quarantine control apparatus (40); and
an instruction unit to instruct the inspection execution module (21) to inspect each inspection item that is identified by the determination unit as not inspectable by the inspection unit,
wherein the inspection unit conducts an inspection for each inspection item which is identified by the determination unit as inspectable by the inspection unit,
wherein the inspection result reporting unit transmits at least one of an inspection result obtained from the inspection unit and an inspection result obtained from the inspection execution module to the quarantine control apparatus (40),
wherein the quarantine control apparatus (40) is configured to, if the inspection result indicates that the quarantine client (10) does not conform to the security policy with regard to a specific inspection item, partially allow connection of the quarantine client (40) to the quarantine network system in order to conduct a remedy operation on that specific inspection item for conforming to the security policy.

2. The quarantine network system of claim 1, wherein the quarantine control apparatus (40) further includes an isolation control unit (50) to isolate the quarantine client (10) based on the inspection result received from the quarantine client (10),
wherein the quarantine client (10) further includes a communication unit (13) to communicate with a remedy module (30) disposable on the network (90A, 90C),
wherein the quarantine client (10) receives a remedy operation by communicating with the remedy module (30) when the quarantine client (10) is isolated by the quarantine control apparatus (40).

## Patentansprüche

1. Quarantänenetzwerksystem, enthaltend:
eine Quarantänesteuervorrichtung (40); und
einen mit der Quarantänesteuervorrichtung (40) über ein Netzwerk (90A) verbindbaren Quarantäneclient (10),
wobei die Quarantänesteuervorrichtung (40) enthält:
eine Empfangseinheit zum Empfangen von Bestätigungsinformationen des Quarantäneclients (10);
eine Identifikationseinheit zum Identifizieren einer Sicherheitsrichtlinie, der der Quarantäneclient (10) entsprechen muss, basierend auf den Bestätigungsinformationen; und
eine Inspektionsanfrageeinheit zum Übertragen einer Inspektionsanfrage an den Quarantäneclient (10), wobei die Inspektionsanfrage bei dem Quarantäneclient wegen einer Inspektion der Konformität/Nichtkonformität mit der von der Identifikationseinheit identifizierten Sicherheitsrichtlinie anfragt,
wobei der Quarantäneclient (10) enthält:
einen Empfänger zum Empfangen der Inspektionsanfrage von der Quarantänesteuervorrichtung (40);
eine Speichereinheit (21), die für eine Inspektion der Konformität/Nichtkonformität mit der für den Quarantäneclient (10) eingestellten Sicherheitsrichtlinie verwendbare Inspektionsinformationen speichern kann;
eine Leseeinheit zum Auslesen der Inspektionsinformationen von der Speichereinheit (12) in Anbetracht der von dem Empfänger empfangenen Inspektionsanfrage;
eine Inspektionseinheit zum Inspizieren des Quarantäneclients (10), indem die von der Leseeinheit aus der Speichereinheit (12) ausgelesenen Inspektionsinformationen verwendet werden; und
eine Inspektionsergebnisberichtseinheit zum Übertragen eines von der Inspektionseinheit erhaltenen Inspektionsergebnisses an die Quarantänesteuervorrichtung (40),
wobei das Quarantänenetzwerksystem ferner enthält:
ein außerhalb des Quarantäneclients (10) angeordnetes Inspektionsinformationsmodul zum Speichern von zum Inspizieren der Konformität/Nichtkonformität zu jeder Sicherheitsrichtlinie verwendbaren Inspektionsinformationen, und
ein außerhalb des Quarantäneclients (10) angeordnetes Inspektionsausführungsmodul (21) zum Inspizieren des Quarantäneclients (10),
wobei die Quarantänesteuervornchtung (40) ferner enthält:
eine Anfrageeinheit zum Ausgeben einer Anfrage für Inspektionsinformationen an das Inspektionsinformationsmodul zum Inspizieren der Konformität/Nichtkonformität mit der von der Identifikationseinheit der Quarantänesteuervorrichtung (40) identifizierten Sicherheitsrichtlinie,
wobei das Inspektionsinformationsmodul mit einer Kommunikationseinheit (43) zum Übertragen der von der Quarantänesteuervorrichtung (40) angeforderten Inspektionsinformationen an die Quarantänesteuervorrichtung (40) versehen ist,
wobei die Inspektionsanfrageeinheit der Quarantänesteuervorrichtung (40) eine Inspektionsanfrage basierend auf den von der Quarantänesteuervorrichtung (40) empfangenen Inspektionsinformationen an den Quarantäneclient (10) überträgt, um eine Inspektion der Konformität/Nichtkonformität mit der Sicherheitsrichtlinie an dem Quarantäneclient (10) anzufordern,
wobei der Quarantäneclient (10) ferner enthält:
eine Bestimmungseinheit zum Bestimmen, ob eine Inspektion für jeden Inspektionsgegenstand von der Inspektionseinheit durchgeführt werden kann, indem in der Speichereinheit (12) des Quarantäneclients gespeicherte Inspektions aus führungs bestimmungs informationen referenziert wird, wenn der Empfänger die Inspektionsanfrage von der Quarantänesteuervorrichtung (40) empfängt; und
eine Anweisungseinheit zum Anweisen des Inspektionsausführungsmoduls (21) zum Inspizieren jedes Inspektionsgegenstands, der von der Bestimmungseinheit als nicht von der Inspektionseinheit inspizierbar identifiziert wird,
wobei die Inspektionseinheit eine Inspektion für jeden Inspektionsgegenstand durchführt, der von der Bestimmungseinheit als von der Inspektionseinheit inspizierbar identifiziert wird,
wobei die Inspektionsergebnisberichtseinheit wenigstens eines von einem von der Inspektionseinheit erhaltenen Inspektionsergebnis und einem von dem Inspektionsausführungsmodul erhaltenen Inspektionsergebnis an die Quarantänesteuervorrichtung (40) überträgt,
wobei die Quarantänesteuervorrichtung (40) eingerichtet ist, eine Verbindung des Quarantäneclients (40) mit dem Quarantänenetzwerksystem teilweise zuzulassen, wenn das Inspektionsergebnis anzeigt, dass der Quarantäneclient (10) bezüglich eines bestimmten Inspektionsgegenstands nicht konform mit der Sicherheitsrichtlinie ist, um eine Abhilfeoperation auf dem bestimmten Inspektionsgegenstand auszuführen, um mit der Sicherheitsrichtlinie konform zu werden.

2. Quarantänenetzwerksystem gemäß Anspruch 1, bei dem die Quarantänesteuervornchtung (40) ferner eine Isolationssteuervorrichtung (50) zum Isolieren des Quarantäneclients (10) basierend auf dem von dem Quarantäneclient (10) empfangenen Ergebnis enthält,
wobei der Quarantäne client (10) ferner eine Kommunikationseinheit (13) zum Kommunizieren mit einem in dem Netzwerk (90A, 90C) verfügbaren Abhilfemodul (30) enthält,
wobei der Quarantäneclient (10) eine Abhilfeoperation durch Kommunizieren mit dem Abhilfemodul (30) empfängt, wenn der Quarantäneclient (10) durch die Quarantänesteuervorrichtung (40) isoliert wird.

## Revendications

1. Système de réseau de quarantaine, comprenant :
un appareil de commande de quarantaine (40) ; et
un client de quarantaine (10) pouvant être connecté à l'appareil de commande de quarantaine (40) via un réseau (90A),
l'appareil de commande de quarantaine (40) comprenant :
une unité de réception pour recevoir des informations de vérification du client de quarantaine (10) ;
une unité d'identification pour identifier une politique de sécurité à laquelle il est requis que le client de quarantaine (10) se conforme sur la base des informations de vérification reçues ; et
une unité de demande d'inspection pour transmettre une demande d'inspection au client de quarantaine (10), la demande d'inspection demandant au client de quarantaine (10) d'inspecter la conformité/non-conformité à la politique de sécurité identifiée par l'unité d'identification,
le client de quarantaine (10) comprenant :
un récepteur pour recevoir la demande d'inspection de l'appareil de commande de quarantaine (40) ;
une unité de stockage (12) qui peut stocker des informations d'inspection utilisables pour inspecter la conformité/non-conformité à la politique de sécurité établie pour le client de quarantaine (10) ;
une unité de lecture pour sortir en lecture les informations d'inspection de l'unité de stockage (12) au vu de la demande d'inspection reçue par le récepteur ;
une unité d'inspection pour inspecter le client de quarantaine (10) en utilisant les informations d'inspection sorties en lecture par l'unité de lecture de l'unité de stockage (12) ; et
une unité de rapport de résultat d'inspection pour transmettre un résultat d'inspection obtenu par l'unité d'inspection à l'appareil de commande de quarantaine (40),
le système de réseau de quarantaine comprenant en outre :
un module d'informations d'inspection, disposé à l'extérieur du client de quarantaine (10), pour stocker des informations d'inspection utilisables pour inspecter la conformité/non-conformité à chaque politique de sécurité, et
un module d'exécution d'inspection (21), disposé à l'extérieur du client de quarantaine (10), pour inspecter le client de quarantaine (10),
dans lequel l'appareil de commande de quarantaine (40) comprend en outre :
une unité de demande pour émettre une demande d'informations d'inspection vers le module d'informations d'inspection pour inspecter la conformité/non-conformité à la politique de sécurité identifiée par l'unité d'identification de l'appareil de commande de quarantaine (40),
dans lequel le module d'informations d'inspection est pourvu d'une unité de communication (43) pour transmettre les informations d'inspection demandées par l'appareil de commande de quarantaine (40) à l'appareil de commande de quarantaine (40),
dans lequel, sur la base des informations d'inspection reçues par l'appareil de commande de quarantaine (40), l'unité de demande d'inspection de l'appareil de commande de quarantaine (40) transmet une demande d'inspection au client de quarantaine (10) pour demander une inspection de conformité/non-conformité à la politique de sécurité au niveau du client de quarantaine (10),
dans lequel le client de quarantaine (10) comprend en outre :
une unité de détermination pour déterminer si une inspection peut être conduite pour chaque article d'inspection par l'unité d'inspection en se référant à des informations de détermination d'exécution d'inspection stockées dans l'unité de stockage (12) du client de quarantaine lorsque le récepteur reçoit la demande d'inspection de l'appareil de commande de quarantaine (40) ; et
une unité d'instruction pour donner pour instruction au module d'exécution d'inspection (21) d'inspecter chaque article d'inspection qui est identifié par l'unité de détermination comme ne pouvant pas être inspecté par l'unité d'inspection,
dans lequel l'unité d'inspection conduit une inspection pour chaque article d'inspection qui est identifié par l'unité de détermination comme pouvant être inspecté par l'unité d'inspection,
dans lequel l'unité de rapport de résultat d'inspection transmet au moins un d'un résultat d'inspection obtenu à partir de l'unité d'inspection et d'un résultat d'inspection obtenu à partir du module d'exécution d'inspection à l'appareil de commande de quarantaine (40),
dans lequel l'appareil de commande de quarantaine (40) est configuré pour, si le résultat d'inspection indique que le client de quarantaine (10) n'est pas conforme à la politique de sécurité en ce qui concerne un article d'inspection spécifique, permettre partiellement la connexion du client de quarantaine (10) au système de réseau de quarantaine afin de conduire une opération de remédiation sur cet article d'inspection spécifique pour se conformer à la politique de sécurité.

2. Système de réseau de quarantaine selon la revendication 1, dans lequel l'appareil de commande de quarantaine (40) comprend en outre une unité de commande d'isolement (50) pour isoler le client de quarantaine (10) sur la base du résultat d'inspection reçu du client de quarantaine (10),
dans lequel le client de quarantaine (10) comprend en outre une unité de communication (13) pour communiquer avec un module de remédiation (30) pouvant être disposé sur le réseau (90A, 90C),
dans lequel le client de quarantaine (10) reçoit une opération de remédiation en communiquant avec le module de remédiation (30) lorsque le client de quarantaine (10) est isolé par l'appareil de commande de quarantaine (40).
